(19) **Europäisches Patentamt / European Patent Office / Office européen des brevets**

(11) **EP 2 512 146 A1**

(12) **EUROPEAN PATENT APPLICATION**
published in accordance with Art. 153(4) EPC

(43) Date of publication:
**17.10.2012 Bulletin 2012/42**

(21) Application number: **10835699.9**

(22) Date of filing: **08.12.2010**

(51) Int Cl.:
**H04N 13/02** (2006.01)     **G03B 17/18** (2006.01)
**G03B 35/08** (2006.01)     **H04N 5/225** (2006.01)

(86) International application number:
**PCT/JP2010/007138**

(87) International publication number:
**WO 2011/070774 (16.06.2011 Gazette 2011/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2009 JP 2009279154**

(71) Applicant: **Panasonic Corporation
Kadoma-shi
Osaka 571-8501 (JP)**

(72) Inventor: **SAITO, Hiroshi
Osaka-shi, Osaka 540-6207 (JP)**

(74) Representative: **Eisenführ, Speiser & Partner
Postfach 10 60 78
28060 Bremen (DE)**

(54) **3-D VIDEO PROCESSING DEVICE AND 3-D VIDEO PROCESSING METHOD**

(57)     A 3D image processing device capable of processing a 3D image signal, the 3D image signal including a left eye image signal and a right eye image signal and realizing a 3D image. The 3D image processing device includes: a parallax detecting unit operable to receive the left eye image signal and the right eye image signal, detect a parallax of an object within the 3D image, and output the detected parallax as parallax information; and an image processing unit operable to perform, based on the parallax information, a predetermined image processing to an image region of an object of at least one of the left eye image signal and the right eye image signal, the object having a parallax within a predetermined range.

Fig.3

**Description**

Technical Field

The present invention relates to a 3D image processing device and a 3D image processing method for processing a stereoscopically viewable image (a 3D image), and in particular, to a 3D image processing device and a 3D image processing method that assists 3D image creation.

Background Art

Attention is being given to 3D image imaging devices that shoot images to be presented respectively to the left eye and the right eye of an observer (i.e., a left eye image and a right eye image), to thereby generate a stereoscopically viewable image signal (a 3D image signal).

It is known that, by adjusting the arrangement of a left eye image camera (a left eye image imaging unit) that images a left eye image and a right eye image camera (right eye image imaging unit) that images a right eye image, the magnitude of the stereoscopic effect of a 3D image can be changed. That is, by adjusting arrangement of the two cameras, the magnitude of the parallax of an object included in the left eye image and the right eye image can be adjusted. For example, by adjusting the amount such as the inter-camera distance in the direction substantially perpendicular to the optical axes of the cameras, an intersecting angle (a convergence angle) of the optical axes of the cameras and the like, the magnitude of the stereoscopic effect of the 3D image can be changed. It is known that the convergence angle can be changed by adjusting the position of the lens of each camera.

The average interval of the eyes of an adult is approximately 65 mm. Therefore, the interval of the two cameras, i.e., the left eye image imaging unit and the right eye image imaging unit, is basically set to 65 mm. However, in some cases, each of the cameras is oversized and the cameras cannot be installed with an interval of 65 mm. When the interval of the two cameras is greater than 65 mm, a 3D image having further enhanced stereoscopic effect is generated. When the interval of the two cameras is narrower than, e.g., 65 mm, a 3D image having weaker stereoscopic effect is generated.

Further, in shooting a 3D image, it is desired that the directions of the optical axes of the two cameras are changed according to the distance to the targeted object, to thereby change the convergence angle and perform shooting. In the case where the distance to the targeted object is small, by shooting with a further greater convergence angle, the parallax as to the image of the object included in each of the left eye image and the right eye image is prevented from becoming excessively great. Conversely, when the distance to the targeted object is great, shooting with a small convergence angle does not cause the parallax as to the image of the targeted object to become excessively great. Here, it can be understood that the distance to the targeted object matches with the focused distance of the lens of each camera, in general shooting.

Based on the foregoing, when shooting a 3D image using two cameras that structures the left eye image imaging unit and right eye image imaging unit, it is necessary to adjust the interval of the cameras and the convergence angle in accordance with the focused distance and the focal length (the zoom magnification), to adjust the magnitude of the stereoscopic effect of the 3D image. Therefore, the shooting of a 3D image requires many techniques and a large amount of know-how.

It has been pointed out that, when the stereoscopic effect of the 3D image is inappropriately adjusted, the unnatural stereoscopic effect of the generated 3D image may impair observer's health, e.g., causing dizziness or nausea. In order to create a 3D image that is natural and brings no discomfort, adjustment of the cameras while shooting is highly important.

Patent Literature 1 (JP2001-142166A) discloses a 3D camera. This 3D camera includes two cameras that structure a left eye image imaging device and a right eye image imaging device, respectively. These two cameras are arranged such that their optical axes are parallel to each other (i.e., such that the convergence angle becomes zero), and configured such that the inter-camera distance of the two cameras is adjustable. This 3D camera further includes means for defining a depth range of objects in the scene being shot. Based on the depth range defined by that means, the camera interval with which the maximum amount of the parallax in the 3D image is less than a predetermined maximum parallax is obtained, and the camera interval suitable for shooting is presented to the user. Thus, even in the case where a photographer does not have special knowledge, a 3D image suitable for being displayed and of high quality can be imaged.

The 3D camera of Patent Literature 1 (JP2001-142166A) has its convergence angle fixed to zero, and the interval of the two cameras is adjustable.

Another technique that has been developed is a pan head that can automatically adjust the convergence angle of two cameras in association with the focused distance or the focal length (the zoom magnification) of the two cameras. However, there still are problems to be solved, e.g., an effective operation cannot be achieved in the case where the distance to the object is extremely close.

Citation List

Patent Literature

Patent Literature 1: JP2001-142166A

## Summary of Invention

### Technical Problem

However, at an actual 3D image creating site (shooting site), there still are many situations where it is difficult to shoot a natural 3D image that brings no discomfort. For example, when shooting is performed in a situation where the scene or the characters change from moment to moment, or when a sport in which the next action cannot be predicted is shot, the parallax of an object may briefly become extremely great. Further, for example in shooting a scene in which far objects and near objects both exist, in some cases, the parallax of some objects (e.g., the near object) inevitably becomes excessively great. However, the viewfinder of the conventional camera mostly presents the 2D video image display. In such a case, it is very difficult to determine at the shooting site whether or not the 3D image is natural and brings no discomfort.

Accordingly, at the 3D image shooting site, what is required is means for allowing the person who shoots a 3D image to shoot the image while determining on a real-time basis whether or not a 3D image that is natural and brings no discomfort is shot.

Further, in the editing process that follows the shooting also, what is required is means for allowing the editor to quickly and correctly determine whether or not the shot 3D image is a 3D image that is natural and brings no discomfort. When the editor can quickly and easily determine whether or not the 3D image is natural and brings no discomfort, it becomes also easier to correct any problem in the 3D image. Thus, it is expected that the 3D image creating process becomes efficient.

As described above, in connection with creation of a 3D image, means for easily determining, at the shooting site and in the editing process following the shooting, what is required is means for determining whether or not a 3D image is natural and brings no discomfort to the observer of the image.

In consideration of the foregoing problems, the embodiments provide a 3D image processing device that helps a user to create a natural 3D image that brings no discomfort.

### Solution to Problem

One aspect is a 3D image processing device capable of processing a 3D image signal, the 3D image signal including a left eye image signal and a right eye image signal and realizing a 3D image. The 3D image processing device includes: a parallax detecting unit operable to receive the left eye image signal and the right eye image signal, detect a parallax of an object within the 3D image, and output the detected parallax as parallax information; and an image processing unit operable to perform, based on the parallax information, a predetermined image processing to an image region of an object of at least one of the left eye image signal and the right eye image signal, the object having a parallax within a predetermined range.

In one aspect, preferably, the parallax detecting unit may include a pixel interpolation unit operable to perform a pixel interpolation to the left eye image signal and to the right eye image signal; and a difference comparison unit operable to perform a difference comparison based on the left eye image signal that has undergone the pixel interpolation and is output from the pixel interpolation unit and the right eye image signal that has undergone the pixel interpolation and is output from the pixel interpolation unit, the difference comparison unit detecting the parallax of the object at a precision higher than 1 pixel precision, to output the parallax information.

In one aspect, preferably, the image processing unit may perform a process of applying a marker to the image region of the object having a parallax whose magnitude is greater than a predetermined value.

In one aspect, preferably, the image processing unit may perform a process of applying a marker to the image region of the object having a parallax whose magnitude is equal to or smaller than a predetermined value.

In one aspect, preferably, the image processing unit may perform a defocus processing to the image region of the object having a parallax whose magnitude is greater than a predetermined value.

In one aspect, preferably, the image processing unit may perform a defocus process to the image region of the object having a parallax whose magnitude is equal to or smaller than a predetermined value.

In one aspect, preferably, the 3D image processing device may further include: a depth of field detecting unit operable to receive at least one of first setting information of a camera of a first imaging device that outputs the left eye image signal and second setting information of a camera of a second imaging device that outputs the right eye image signal to detect a depth of field of at least one of the camera of the first imaging device and the camera of the second imaging device, and output the detected depth of field as depth of field information; and a distance detecting unit operable to detect a distance from the first imaging device and the second imaging device to the object based on the parallax information and the depth of field information, in which the image processing unit may determine, based on the detected distance and the depth of field, the image region to which the predetermined image processing is to be performed in at least one of the left eye image signal and the right eye image signal.

In one aspect, preferably, the image processing unit may perform a process of applying a marker to the image region of the object within the depth of field.

In one aspect, preferably, the image processing unit may perform a process of applying a marker to the image region of the object outside the depth of field.

In one aspect, preferably, the 3D image processing device may further include an input unit operable to receive a size of a display screen of a display device that performs a 3D image display based on the 3D image signal, in which, based on the size of the display screen received from the input unit, the image region to which the predetermined image process is to be performed is determined.

Another aspect is a 3D image processing method for processing a 3D image signal, the 3D image signal including a left eye image signal and a right eye image signal and realizing a 3D image. The 3D image processing method includes: receiving the left eye image signal and the right eye image signal, detecting a parallax of an object within the 3D image, and outputting the detected parallax as parallax information; and performing, based on the parallax information, a predetermined image processing to an image region of an object of at least one of the left eye image signal and the right eye image signal, the object having a parallax within a predetermined range.

Advantageous Effects of Invention

With the 3D image processing device of the present embodiment, an image process according to a parallax of an object of a 3D image is performed. This allows an observer to easily determine whether or not the 3D image is natural and brings no discomfort and efficiently create a 3D image.

Brief Description of Drawings

Fig. 1 is a schematic diagram of a relationship between a 3D image imaging device and several objects;
Fig. 2A is an exemplary illustration of a left eye image and a right eye image of a 3D image, and a combined image of the foregoing images;
Fig. 2B is an exemplary illustration of a left eye image and a right eye image of a 3D image, and a combined image of the foregoing images;
Fig. 3 is a block diagram of a 3D image imaging device which includes a 3D image processing device according to a first embodiment;
Fig. 4 is a detailed block diagram of a parallax detecting unit of the 3D image processing device;
Fig. 5A is an exemplary illustration of a left eye image and a right eye image of a 3D image, and a combined image of the foregoing images on which a marker is overlaid;
Fig. 5B is an exemplary illustration of a left eye image and a right eye image of a 3D image, and a combined image of the foregoing images on which a marker is overlaid;
Fig. 6 is a conceptual diagram for describing the difference in absolute parallax magnitude attributed to the difference in the size of a 3D image display plane;

Fig. 7 is a block diagram of a 3D image imaging device which includes a 3D image processing device according to a second embodiment;
Fig. 8 is a conceptual diagram for describing the principle of obtaining the distance between the 3D image imaging device and an object;
Fig. 9A is an exemplary illustration of a left eye image and a right eye image of a 3D image, and a combined image of the foregoing images on which a marker is overlaid;
Fig. 9B is an exemplary illustration of a left eye image and a right eye image of a 3D image, and a combined image of the foregoing images on which a marker is overlaid;
Fig. 10 is a block diagram of a 3D image imaging device which includes a 3D image processing device according to a third embodiment; and
Fig. 11 is an exemplary illustration of a left eye image and a right eye image of a 3D image, and a combined image of the foregoing images having undergone a partial defocus processing.

Description of Embodiments

In the following, a detailed description of embodiments of the present invention will be given.

1. First Embodiment

1-1. Overview

A 3D image processing device according to the present embodiment is a 3D image processing device that can output an image with which whether or not a 3D image is a natural 3D image that brings no discomfort can easily be determined. More specifically, the present 3D image processing device detects a parallax between a left eye image and a right eye image as to an object in a 3D image, and based on the detected parallax, detects an image region of an object in the image which is highly possible to discomfort an observer. Then, the 3D image processing device provides a predetermined image process, e.g., a marker display processing or the like for enhancing the image region, to the detected image region of the object, and outputs the processed result.

The image that has undergone the marker display processing or the like allows an observer to easily recognize the image region which is highly possible to discomfort the observer, and to determine whether or not the image is a natural 3D image that brings no discomfort.

1-2. Structure

1-2-1. 3D Image

First, a brief description will be given of a 3D image, which the 3D image processing device according to the present embodiment processes.

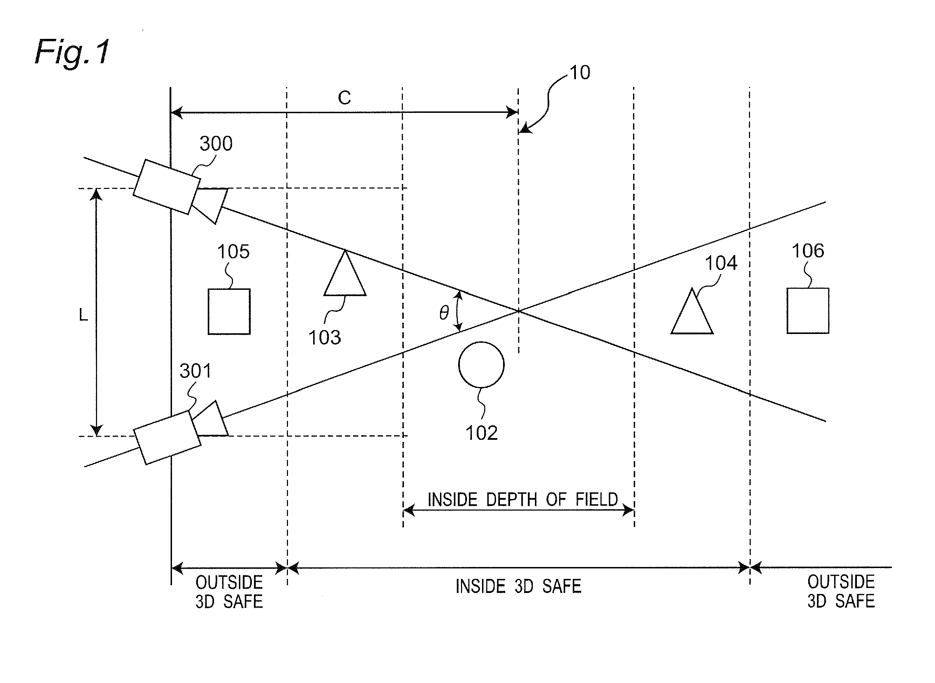

Fig. 1 is a schematic diagram of the arrangement of a first imaging unit 300 and a second imaging unit 301 included in a 3D image imaging device, and a positional relationship between the 3D image imaging device and objects 102, 103, 104, 105, and 106.

The first imaging unit 300 and the second imaging unit 301 of the 3D image imaging device are imaging devices for imaging a left eye image and a right eye image, respectively. The first imaging unit 300 and the second imaging unit 301 are arranged so as to have a distance L between each other while their respective optical axes crossing each other forming an angle θ. The angle θ is generally referred to as a convergence angle. The intersection point of the optical axes is away from first imaging unit 300 and second imaging unit 301 by approximately a distance C. A plane 10 that includes the intersection point of the optical axes and that is away from the first imaging unit 300 and the second imaging unit 301 approximately by the distance C is referred to as a reference plane. When a 3D image of an object is shot in this situation, the parallax of the left eye image and the right eye image as to the object becomes greater as the distance between the object and the reference plane 10 becomes greater.

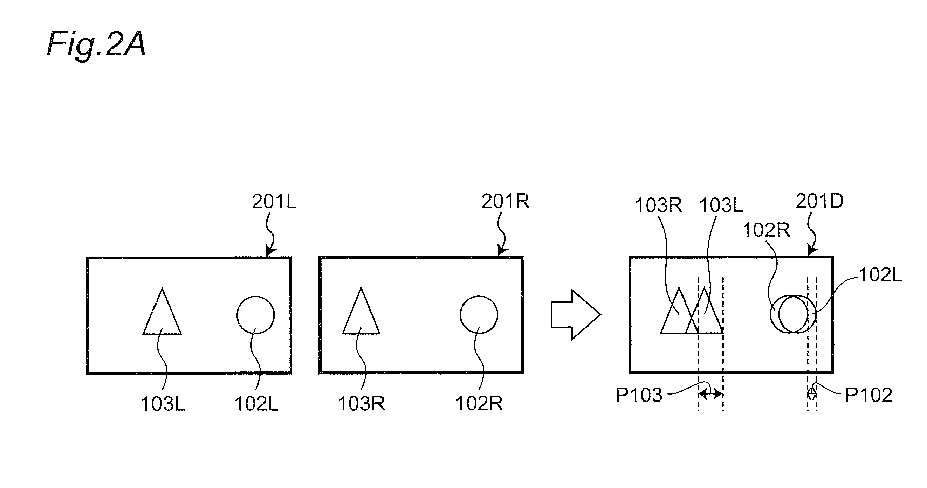

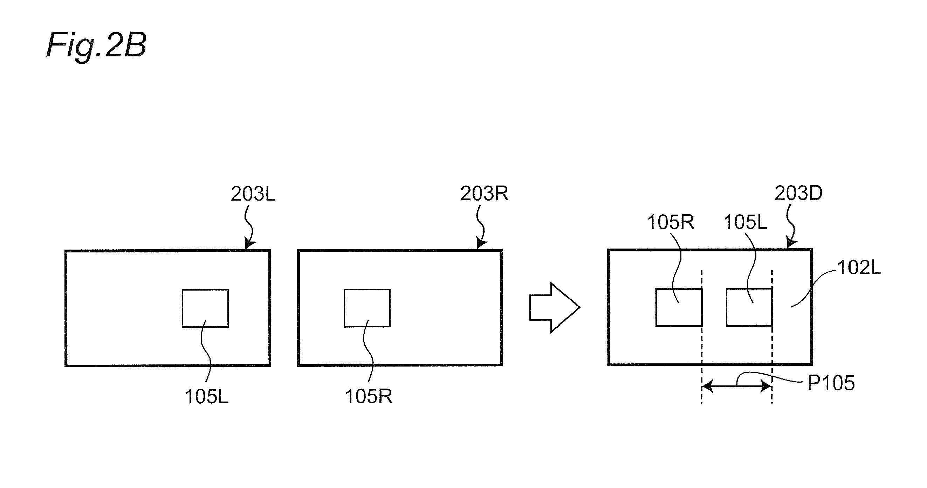

With reference to Figs. 1, 2A and 2B, a description will be given of the relationship between the distance between a position at which an object actually exists and the reference plane 10 and a parallax given to the object in a 3D image.

Fig. 2A shows a 3D image (a left eye image 201 L and a right eye image 201 R) obtained by imaging the object 102 and the object 103 in the situation shown in Fig. 1, and a combined image 201 D obtained by combining the images. Fig. 2B shows a 3D image (a left eye image 203L and a right eye image 203R) obtained by imaging the object 105 shown in Fig. 1, and a combined image 203D obtained by combining the images.

With reference to Fig. 2A, the parallax of the object 102 in the 3D image is a parallax P102. Similarly, the parallax of the object 103 in the 3D image is a parallax P103. Next, with reference to Fig. 2B, the parallax of the object 105 in the 3D image is a parallax P105. Thus, taking up the objects 102, 103, and 105 as examples, in the 3D image, the parallax of the object 105 is the greatest, the parallax of the object 103 being the second greatest, and the parallax of the object 102 being the smallest. Thus, as the position at which an object actually exists becomes farther from the reference plane 10, the parallax of the object in the 3D image becomes greater.

This holds true also in the case where an object is positioned farther than the reference plane 10. That is, taking up the object 104 and the object 105 shown in Fig. 1 as examples, in the 3D image, the parallax of the object 105 becomes greater than the parallax of the object 104.

As described above, the brain of a human being is capable of recognizing the stereoscopic effect from the parallax of two images received from the right and left eyes. However, two images with an extremely great parallax are not recognized as a natural image. Therefore, the 3D image with an extremely great parallax as shown in Fig. 2B is recognized as an image that causes discomfort. Watching such a 3D image for a long period may cause fatigue. Accordingly, in order for the 3D image to comfortably be enjoyed for a long period, it is preferable that the 3D image should be an image that is natural and brings no discomfort.

In order to create a 3D image that is natural and brings no discomfort, in shooting a 3D image, it is desirable that shooting is carried out such that the magnitude of the parallax of an object included in the 3D image does not exceed a predetermined range.

Hence, whether or not the magnitude of the parallax of an object in a 3D image falls within a predetermined range depends on whether or not the object is positioned within a predetermined space whose center is the reference plane. Here, as shown in Fig. 1, the range in which the magnitude of the parallax of an object in a 3D image falls within a predetermined range is referred to as "inside 3D safe". Conversely, the range in which the magnitude of the parallax of an object in a 3D image exceeds a predetermined range is referred to as "outside 3D safe". Here, the predetermined range ranges from zero to a predetermined value, for example. The predetermined value is a value that corresponds to, for example, the magnitude of the parallax with which a 3D image is observed as an image that is natural and brings no discomfort for the observer observing the display surface on which the 3D image is displayed. The value may appropriately be determined taken into consideration of the guideline already disclosed by a plurality of organizations, the size of the display plane or the like.

1-2-2. 3D Image Processing Device

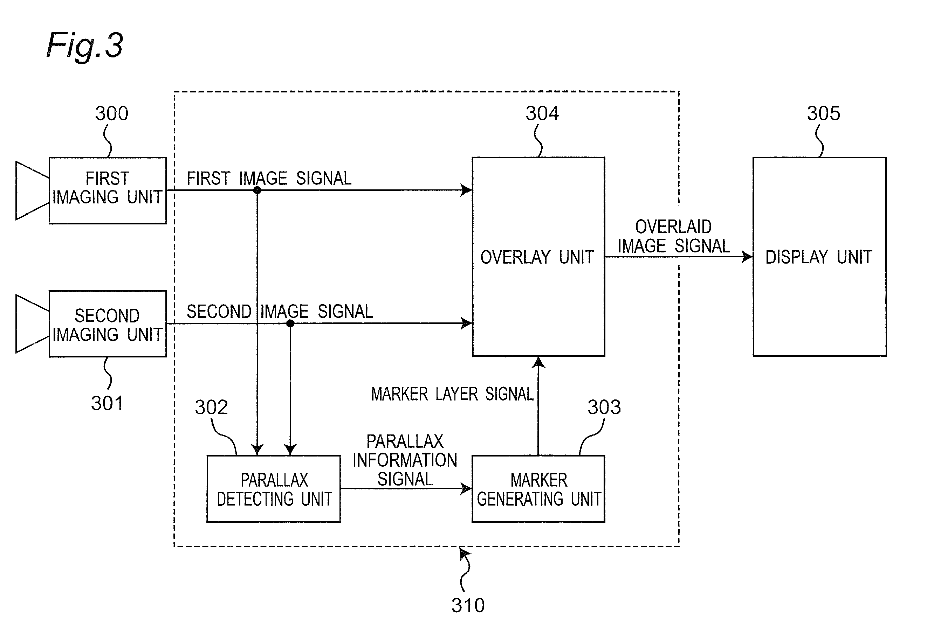

Next, with reference to Fig. 3, a description will be given of the configuration of the 3D image processing device. Fig. 3 is a block diagram of a structure of a 3D image imaging device that includes the 3D image processing device 310 according to the present embodiment.

The 3D image imaging device includes the first imaging unit 300 for imaging the left eye image, the second imaging unit 301 for imaging the right eye image, the 3D image processing device 310 according to the present embodiment, and a display unit 305 such as a viewfinder. The first imaging unit 300 outputs a first image signal (a signal of the left eye image), and the second imaging unit 301 outputs a second image signal (a signal of the right eye image).

The display unit 305 is, e.g., a display device for monitoring an image. The display unit 305 is capable of receiving an output from the 3D image processing device 310 to display a 2D image (i.e., either one of the left eye image and the right eye image), or a 3D image.

The 3D image processing device 310 includes: a parallax detecting unit 302 that receives the first image signal and the second image signal to detect a parallax of an object contained in each of the images; a marker generating unit 303 that creates a marker image (a marker layer) which indicates at least one of: an image region in which an inside 3D safe object is captured; and an image region in which an outside 3D safe object is captured, based on the parallax detected by the parallax detecting unit 302; and an overlay unit 304 that overlays the marker layer on at least one of the left eye image and the right eye image. The overlay unit 304 is capable of outputting, to the display unit 305, an overlaid image in which the marker layer is overlaid on one of the left eye image and the right eye image or on a combined image of the left eye image and the right eye image.

Thus, the observer observing the display unit 305 can observe the overlaid image in which a marker indicative of inside 3D safe or outside 3D safe is overlaid on the image imaged by at least one of the first imaging unit 300 and the second imaging unit 301. By the marker, the observer can easily check whether a partial image region in the 3D image is inside 3D safe or outside 3D safe.

It is to be noted that, the first imaging unit 300 and the second imaging unit 301 may each include an objective lens, a zoom lens, a diaphragm, an OIS (Optical Image Stabilizer) unit, a focus lens, an image pickup element, an AD converter and the like. The image pickup element may be any element that captures an object image formed thereon by the various lenses and generates image data. For example, the image pickup element is a CMOS image sensor or a CCD image sensor. The image pickup element may be of a single-chip type, or may be of a three-chip type in which image pickup elements are provided for R, G and B signal. The AD converter is only required to be capable of converting the image data generated by the image pickup element into a digital signal.

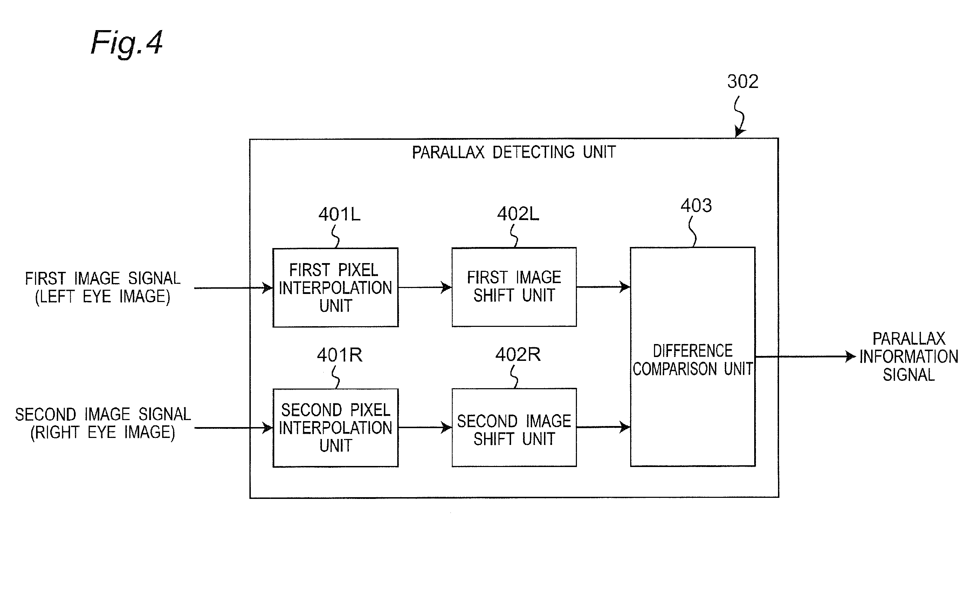

Fig. 4 is a detailed block diagram of the parallax detecting unit 302.

The parallax detecting unit 302 includes: a first pixel interpolation unit 401 L that performs pixel interpolation to a left eye image; a second pixel interpolation unit 401 R that performs pixel interpolation to a right eye image; and a first image shift unit 402L and a second image shift unit 402R that detect an image shift; and a difference comparison unit 403. With these components, the parallax detecting unit 302 detects a shift of an image between the left eye image and the right eye image at a precision higher than 1 pixel precision. Thus, the parallax detecting unit 302 can detect the magnitude of an identical object's parallax between in the left eye image imaged by the first imaging unit 300 and in the right eye image imaged by the second imaging unit 301 at a precision higher than 1 pixel precision. It is to be noted that, the parallax detecting unit 302 may distinguish between a parallax obtained in the case where the object is positioned nearer than the reference plane and a parallax obtained in the case where the object is positioned farther than the reference plane by allotting a sign (plus and minus), for example, and may output them. Alternatively, the parallax detecting unit 302 may omit such distinguishing and may output the magnitude of the parallax (an absolute value).

The first pixel interpolation unit 401 L receives the first image signal (left eye image) and performs pixel interpolation, to improve its resolution, and outputs a pixel interpolated first image signal to the first image shift unit 402L.

The first image shift unit 402L shifts the image of the pixel interpolated first image signal while varying the shift amount by, e.g., 1 pixel unit in the horizontal direction, and outputs a shifted pixel interpolated first image to the difference comparison unit 403.

The second pixel interpolation unit 401 R and the second image shift unit 402R may similarly be structured as the first pixel interpolation unit 401 L and the first image shift unit 402R, respectively.

The difference comparison unit 403 compares the received shifted pixel interpolated first image against the received shifted pixel interpolation second image, and derives the difference between them. Thus, the difference comparison unit 403 detects, as to an arbitrary pixel of the image represented by the first image signal, a pixel that closely corresponds to the pixel, e.g., the pixel that closely matches in terms of the pixel value, from the image represented by the second image signal.

The difference comparison unit 403 obtains the interval between the arbitrary pixel of the left eye image and the corresponding pixel of the right eye image that closely corresponds to the arbitrary pixel based on the detection result, and determines the interval as the parallax regarding the pixel. Then, the difference comparison unit 403 outputs the parallax as a parallax information signal.

It is to be noted that, for an arbitrary pixel in the first image (e.g., left eye image), the difference comparison unit 403 may detect a group of pixels in the second image (e.g., right eye image) that closely matches with a group of pixels which includes the arbitrary pixel and pixels surrounding the arbitrary pixel so as to derive the parallax regarding the central pixel of the group of pixels.

Further, for an arbitrary pixel block which includes a plurality of pixels in the first image (e.g., left eye image), the difference comparison unit 403 may detect a pixel block in the second image (e.g., right eye image) that closely matches with the arbitrary pixel block so as to derive the parallax regarding the arbitrary pixel block. The arbitrary pixel block may be a pixel block of $2 \times 2$ pixels, or a pixel block of $4 \times 4$ pixels, for example.

Based on the parallax information signal output from the parallax detecting unit 302, the marker generating unit 303 compares the magnitude of the parallax of an arbitrary pixel of at least one of the first image and the second image against a predetermined threshold value to determine whether the pixel is a pixel of an image of an object inside 3D safe or a pixel of an image of an object outside 3D safe. The marker generating unit 303 generates a marker layer by applying a marker, for example, at the position of the pixel of the image of the object outside 3D safe, so that the pixel is displayed in an enhanced manner. The marker layer is output to the overlay unit 304 as a marker layer signal.

The overlay unit 304 combines the marker layer with at least one of the first image signal and the second image signal, or with a composite signal of the first image signal and the second image signal, and outputs an overlaid image signal.

In this manner, the marker generating unit 303 and the overlay unit 304 configures an image processing unit that performs a predetermined image processing to at least one of the first image signal (left eye image signal) and the second image signal (right eye image signal) based on the comparison between the magnitude of the parallax of the object and a predetermined value.

1-3. Operation

In the following, a description will be given of the operation of the 3D image processing device 310. In the following, the description of the operation will be given taking up an example of imaging the objects 102, 103, and 105 shown in Fig. 1.

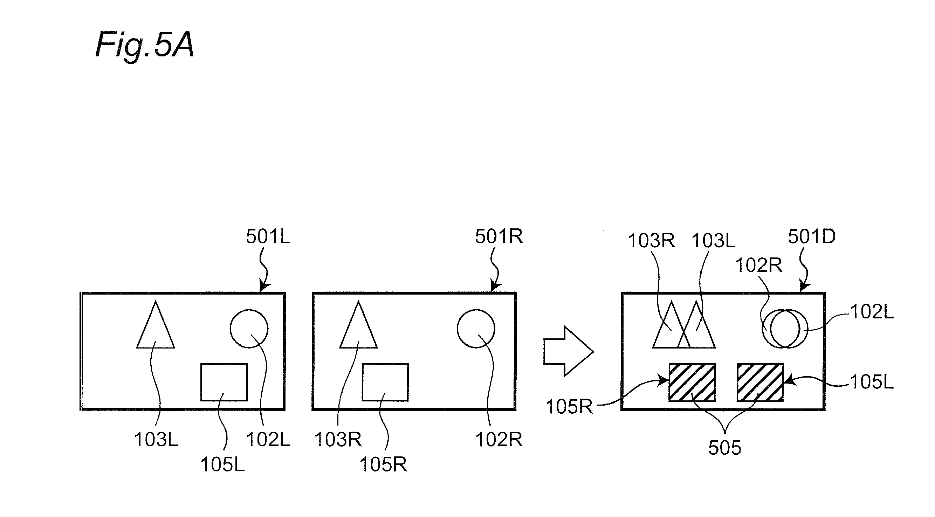

Fig. 5A illustrates a left eye image 501 L imaged by the first imaging unit 300, a right eye image 501 R imaged by the second imaging unit 301, and an overlaid image 501 D in which a marker layer is combined with a combined image of the left eye image and the right eye image.

The parallax detecting unit 302 of the 3D image processing device 310 receives the left eye image 501 L and the right eye image 501 R, and through the first pixel interpolation unit 401 L and the second pixel interpolation unit 401 R, the first image shift unit 402L and the second image shift unit 402R, and the difference comparison unit 403 as described above, as to an arbitrary pixel of the left eye image 501 L, the parallax detecting unit 302 detects a pixel of the right eye image 501 R that closely corresponds to the arbitrary pixel, to obtain the interval between the pixels. Then, the parallax detecting unit 302 determines the interval as the parallax, and outputs a parallax information signal to the marker generating unit 303.

Based on the parallax information signal, the marker generating unit 303 generates, as to a pixel whose parallax exceeds a predetermined threshold value, a marker layer such that the pixel is displayed in an enhanced manner, and outputs it as a marker layer signal to the overlay unit 304.

The overlay unit 304 overlays, on at least one of the first image signal and the second image signal, or on the signal of the combined image of the first image and the second image, a marker layer that indicates the image region of an object outside 3D safe, and outputs an overlaid image signal.

The overlaid image 501 D in Fig. 5A is an example of an image in which a marker is overlaid on the signal of the combined image of the first image and the second image. In this example, the marker is a zebra pattern that flashes.

Thus, the display unit 305 displays the image in which the marker is applied to the image region of an object outside 3D safe. Hence, the observer who watches the display unit 305 can easily and quickly determine whether or not an object outside 3D safe is included in the 3D image. Since such a marker is excellent in visibility, even in the case where the display unit 305 is a viewfinder that has a small display plane and can only present 2D display, the observer can easily and quickly determine whether or not an object in the outside 3D safe is included in the 3D image being shot.

Further, even in the case where minute adjustment of the camera position is required, the optimum camera setting can easily be carried out while checking the marker. Therefore, the shooting efficiency can largely be improved and, as a result, the health of the viewer can be protected.

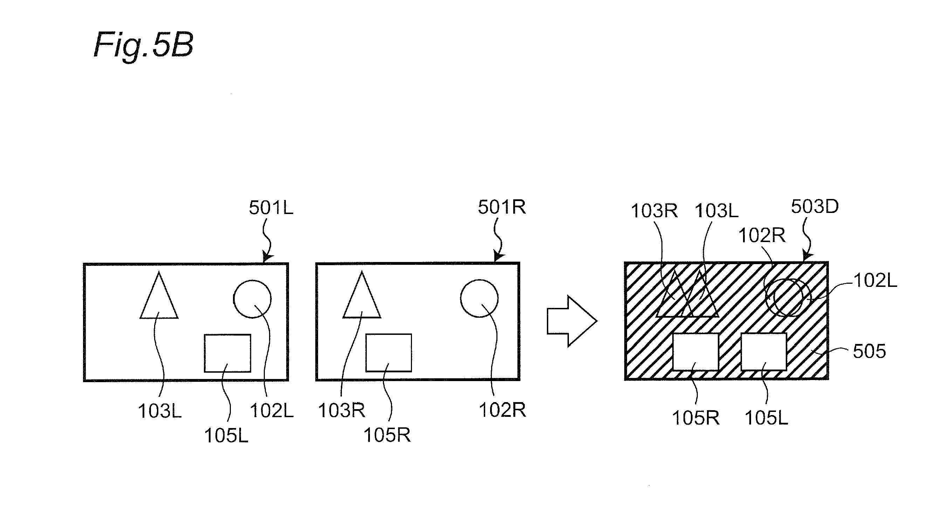

An overlaid image 503D shown in Fig. 5B is an example of an image in which a marker is applied to the image region of objects inside 3D safe. In this manner, the marker may be applied to the image region of any object inside 3D safe.

It is to be noted that, in the examples of Figs. 5A and 5B, the marker of a flashing zebra (hatched) pattern is generated. However, the marker is not limited to such a flashing zebra pattern, and a marker of any pattern that can display a particular image region in an enhanced manner will suffice. The overlay unit 304 is only required to allow a marker to be displayed as being overlaid on one of the images output from the first imaging unit 300 and the second imaging unit 301, respectively. This allows the observer to distinguish whether an object is inside 3D safe or outside 3D safe by observing the display unit 305, in 2D image display.

1-4. Threshold Value for Determination

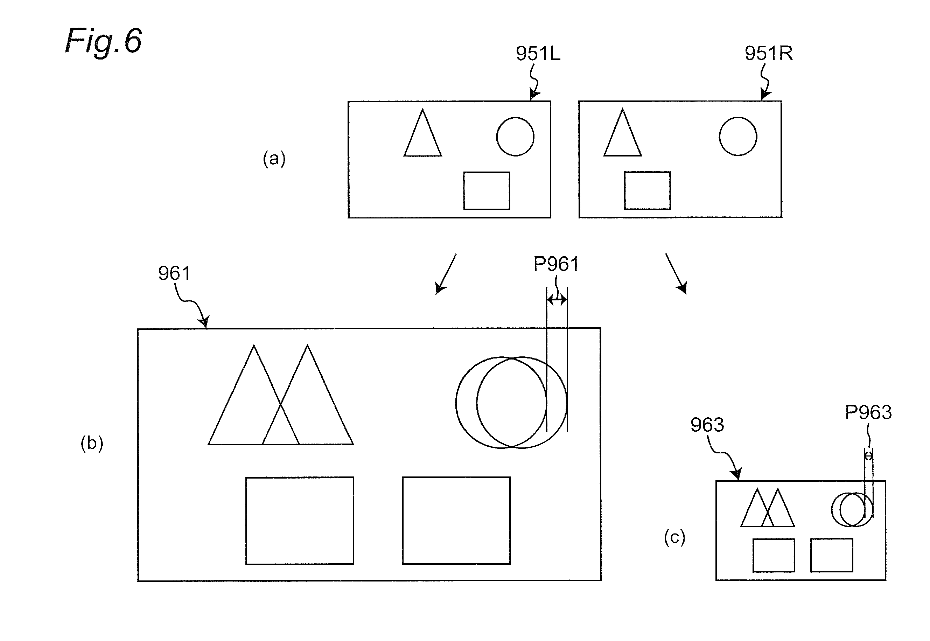

With reference to Fig. 6, a description will be given of a range of 3D safe.

Fig. 6 shows parallaxes observed respectively in display devices 961 and 963 of different sizes. Based on the left eye image 951 L and the right eye image 951 R shown in Fig. 6(a), when a 3D image is displayed on the display device 961 as shown in Fig. 6 (b), the absolute magnitude of the parallax shown by the display device 961 has a magnitude indicated by P961, for example. On the other hand, when the identical 3D image is displayed on the display device 963 as shown in Fig. 6 (c), the absolute magnitude of the parallax on the display device 963 has a magnitude indicated by P963, for example.

In this manner, the absolute magnitude of the parallax changes according to the screen size of the display device on which a 3D image is displayed, even when an identical 3D image is displayed. As the size of the screen of the display device becomes greater, the absolute magnitude of the parallax becomes greater even when the displayed 3D image is identical. This may increase the possibility of discomforting the observer.

The interval of the eyes of an adult is approximately 65 mm. The right and left eyes simultaneously move inward, but not simultaneously outward. Therefore, there is no occasion for a human being to see an image whose parallax is 65 mm or more in nature. Accordingly, when a parallax of 65 mm or more occurs on the display device, it is highly possible that the human brain cannot recognize it as a natural 3D image. That is, whether or not it is 3D safe has a close relationship also with the screen size of the display device on which the 3D image is displayed.

Accordingly, the marker generating unit 303 of the 3D image processing device 310 according to the first embodiment, a marker generating unit 704 of a 3D image processing device 710 according to a second embodiment, and defocus process region instructing unit 1003 according to a third embodiment, both of which will be described later, may be provided with means for preliminarily receiving the screen size of the display device used for displaying the 3D image, and determination criterion between inside 3D safe and outside 3D safe may be made based on whether or not the absolute magnitude of the parallax becomes 65 mm or more on the screen of the display device used for displaying the 3D image.

It is to be noted that, though the description has been given of the determination criterion as to whether or not it is 3D safe in association with the length 65 mm which is the interval of the eyes of an adult, a narrower absolute parallax magnitude (i.e., less than 65 mm) may be employed as the determination criterion for children. Alternatively, a wider absolute parallax magnitude (i.e., more than 65 mm) may be employed as the determination criterion.

## 2. Second Embodiment

### 2-1. Overview

A 3D image processing device according to the present embodiment includes, in addition to the structure of the 3D image processing device 310 according to the first embodiment, a structure of detecting a distance to an arbitrary object. Based on the detected distance, whether or not the object is included in the depth of field is determined. The determination result is reflected in the marker display in the overlaid image output to the display unit 305. It is to be noted that, the depth of field is derived based on the setting information of the camera.

Thus, the observer watching the display unit 305 can easily recognize whether or not the object in the image is in the depth of field. An object being included in the depth of field and the parallax of the object being included in the predetermined range are not necessarily equal. However, an object being included in the depth of field strongly indicates that a 3D image that is natural and brings no discomfort can be created as to the object. Therefore, by achieving an easier determination as to whether or not an object is included in the depth of field, it becomes possible to help a user to create a 3D image that is natural and brings no discomfort.

### 2-2. Structure

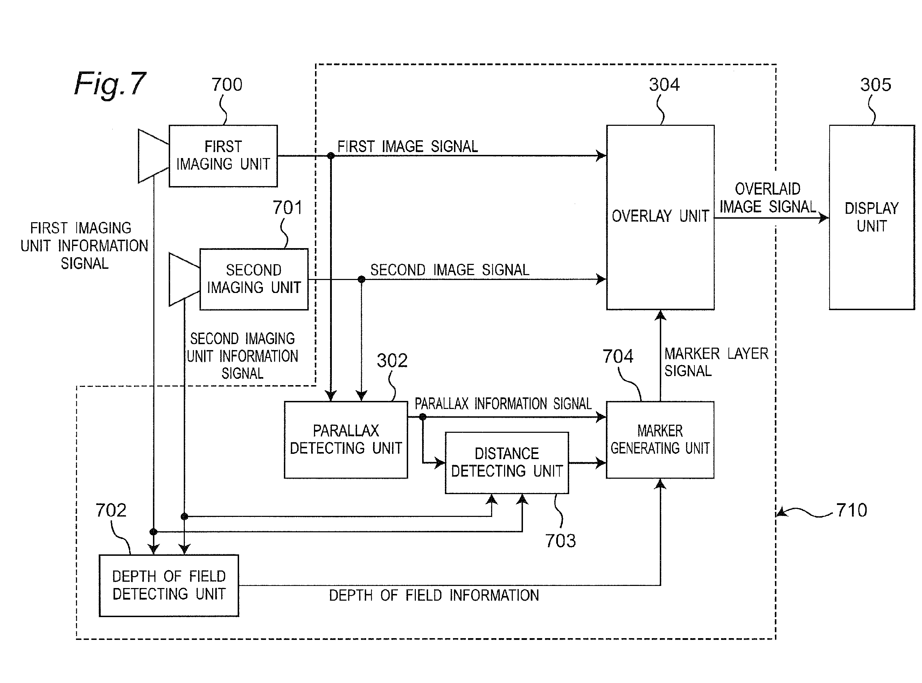

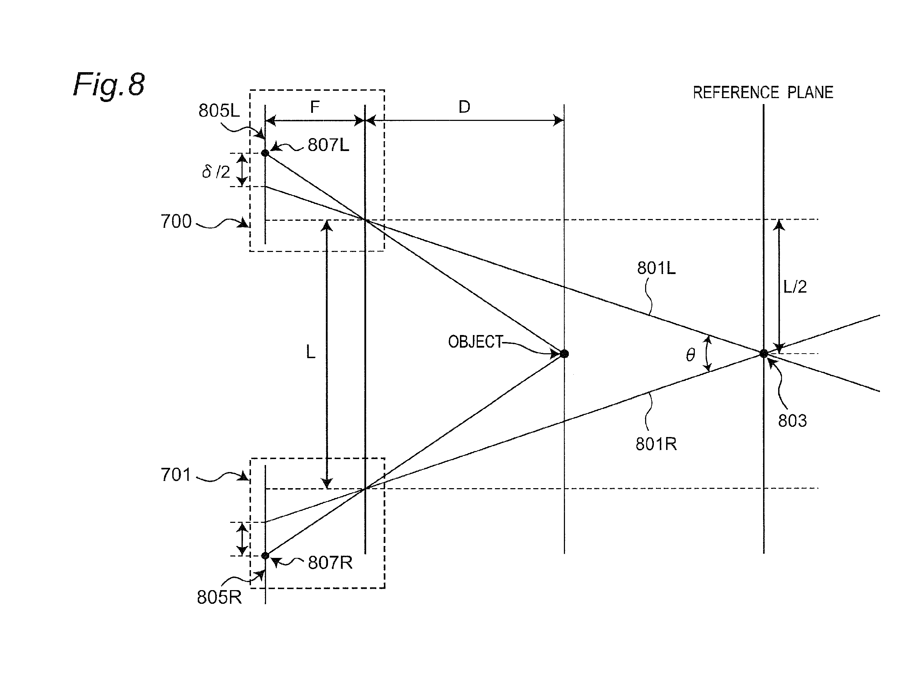

With reference to Figs. 7 and 8, a description will be given of the structure of the 3D image processing device according to the second embodiment. The structures similar to those of the 3D image processing device 310 according to the first embodiment will not necessarily be described repeatedly.

With reference to Fig. 7, the 3D image processing device 710 according to the second embodiment further includes:, in addition to the parallax detecting unit 302 and the overlay unit 304, a depth of field detecting unit 702 that receives at least one of camera setting information (a first imaging unit information signal) of the first imaging unit 700 and camera setting information (a second imaging unit information signal) of the second imaging unit 701 and detects the depth of field of the camera to output the detected depth of field as depth of field information; a distance detecting unit 703 that receives at least one of the first imaging unit information signal and the second imaging unit information signal, and a parallax information signal from the parallax detecting unit 302, and detects the distance from the 3D imaging device to an arbitrary object to output the detected distance as a distance information signal; and a marker generating unit 704 that generates a marker layer based on at least one of the parallax information signal and the distance information signal to output the generated marker layer as a marker layer signal. The first imaging unit information signal may include information such as the focal length, the aperture value, the focused distance, the convergence angle and the like of the lens of the camera of the first imaging unit 700, the inter-camera distance with the camera of the second imaging unit 701 and the like. The second imaging unit information signal may similarly include information such as the focal length, the aperture value, the focused distance, the convergence angle and the like of the lens of the camera of the second imaging unit 701, the inter-camera distance with the camera of the first imaging unit 700 and the like.

The depth of field detecting unit 702 detects the depth of field of the camera of the first imaging unit 700 based on the information such as the focal length, the aperture value, the focused distance and the like of the lens included in the first imaging unit information signal, and outputs the depth of field. Similarly, the depth of field detecting unit 702 detects the depth of field of the camera of the second imaging unit 701 based on the information such as the focal length, the aperture value, the focused distance and the like of the lens included in the second imaging unit information signal, and outputs the depth of field. It is to be noted that, as to the depth of field of the second imaging unit 701, it can be regarded to be substantially identical to the depth of field of the first imaging unit 700, and the output may not be carried out.

The distance detecting unit 703 detects the distance from the 3D image imaging device to an arbitrary object, based on the information included in the first imaging unit information signal such as the focal length, the convergence angle and the like of the lens of the camera of the first imaging unit 700, and the interval between its camera and the camera of the second imaging unit 701, and the parallax information signal. Similarly, the distance detecting unit 703 may detect the distance from the 3D image imaging device to an arbitrary object, based on the information included in the second imaging unit information signal such as the focal length, the convergence angle and the like of the lens of the camera of the second imaging unit 701, and the interval between its camera and the camera of the first imaging unit 700, and the parallax information signal.

Fig. 8 is a diagram describing the principle of detecting the distance using the parallax of the object in each of the left eye image and the right eye image. In the following, with reference to Fig. 8, a description will be given of an object distance detection performed by the distance detecting unit 703.

In Fig. 8, the distance between an object, with which the distance detection is to be performed, and the 3D image imaging device is defined to be D. Further, the installation interval between the camera of the first imaging unit 700 and the camera of the second imaging unit 701 is defined to be L. The lens of each of the first imaging unit 700 and the second imaging unit 701 is set to a focal length F. Further, the optical axes of the respective cameras of the first imaging unit 700 and the second imaging unit 701 intersect with each other forming an angle $\theta$ (a convergence angle $\theta$) on the reference plane. Provided that the parallax of an object in a 3D image is $\delta$, in the image pickup element 805L of the first imaging unit 700, the image of the object is formed at a position 807L; similarly, in the image pickup element 805R of the second imaging unit 700, the image of the object is formed at a position 807R.

Accordingly, using the similarity relationship between the triangle having a height F and the triangle having a height D, the distance D to the object can be obtained as follows:

$$D = L / \{2 \cdot \tan (\theta/2) + \delta / F\}.$$

The calculation precision of the object distance D largely depends on the detection precision of the parallax $\delta$. Accordingly, it becomes important to detect the parallax $\delta$ at the highest possible precision. Hence, it is desirable that the parallax detecting unit 302 uses pixel interpolation to obtain the parallax $\delta$ at a precision higher than 1 pixel.

Returning back to Fig. 7, the depth of field detecting unit 702 detects a depth of the depth of field of the camera of each of the first imaging unit 700 and the second imaging unit 701. The detected depth of field is output to the marker generating unit 704 as a depth of field information signal. Here, as the depth of field information signal, it is preferable that information on a distance Fmin which is the nearest focusing distance and a distance Fmax which is the farthest focusing distance in each of the cameras is included.

The marker generating unit 704 determines a focusing range [Fmin, Fmax] from Fmin and Fmax included in the depth of field information, and determines whether or not the object distance D included in the distance information signal received by the distance detecting unit 703 is included in the range [Fmin, Fmax]. Then, the marker generating unit 704 generates a marker layer such that the marker is applied to the position of the pixel of the image of the object outside the depth of field, and the pixel is displayed in an enhanced manner.

For example, in the situation shown in Fig. 1, objects existing inside the depth of field are only a circular object 102. In addition to the function of the 3D image processing device 310 according to the first embodiment, the 3D image processing device 710 according to the second embodiment can detect the distance from the 3D image imaging device to the object and compare the detected distance with the depth of field, to display a marker (a second marker) in an overlaid manner with which distinction between an object inside the depth of field and an object outside the depth of field can easily be made.

In the present embodiment, the marker generating unit 704 and the overlay unit 304 structure an image processing unit that compares the magnitude of the parallax of an object against a first predetermined value, and based on the comparison, that applies a first marker to one of the first image signal (left eye image signal) and the second image signal (right eye image signal), that compares the distance from the imaging device to the object against a second predetermined value, and based the comparison, applies a second marker to at least one of the first image signal (left eye image signal) and the second image signal (right eye image signal). The first marker and the second marker may be different from each other such that the observer can distinguish between them. The first predetermined value may be a threshold value for determining whether an object is inside 3D safe or outside 3D safe, and the second predetermined value may be a threshold value for determining whether the object is inside the depth of field or outside the depth of field.

2-3. Operation

Now, a description will be given of an operation of the 3D image processing device 710. Similarly to the 3D image processing device 310 according to the first embodiment, the 3D image processing device 710 can generate a marker layer that indicates the inside 3D safe or the outside 3D safe. In the following, for simplicity's sake, the description will be given solely of the operation of generating a marker layer that indicates the inside the depth of field or the outside the depth of field.

As in the first embodiment, the parallax detecting unit 302 of the 3D image processing device 710 outputs a parallax information signal to the marker generating unit 303.

The distance detecting unit 703 detects the distance D of an object (pixel) in the image based on at least one of the first imaging unit information signal and the second imaging unit information signal, and the parallax information signal, and outputs the distance D as a distance information signal to the marker generating unit 704.

Based on the depth of field information and the distance information signal, the marker generating unit 704 generates a marker layer as to a pixel representing the object that is included inside the depth of field such that the pixel is displayed in an enhanced manner, and outputs the marker layer as a marker layer signal to the overlay unit 304.

The overlay unit 304 overlays the marker layer on one of the first image signal and the second image signal, or on the combined image signal of the first image and the second image, and outputs the result.

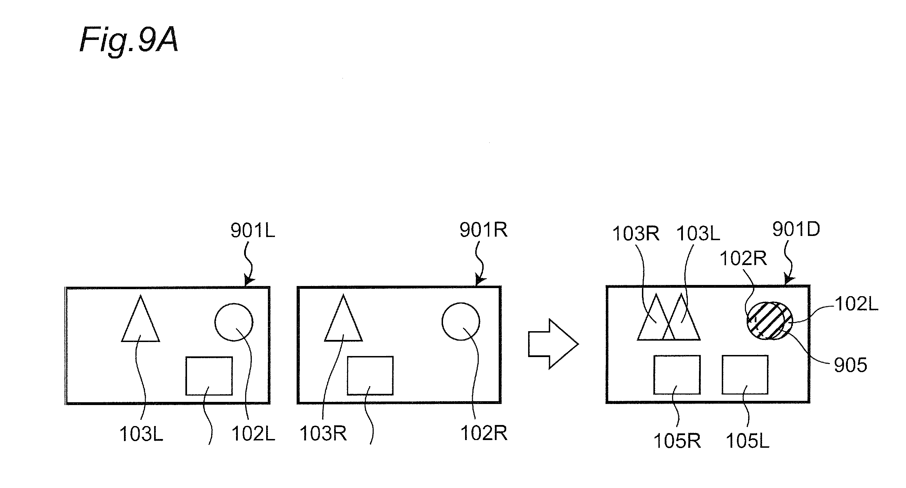

Fig. 9A shows a left eye image 901 L imaged by the first imaging unit 700, a right eye image 901 R imaged by the second imaging unit 701, and an overlaid image 901 D obtained by a marker layer being overlaid on the combined image of the left eye image and the right eye image.

As to the overlaid image 901 D shown in Fig. 9A, a marker is applied to an object that is inside the depth of field.

Thus, the display unit 305 displays an image in which the marker is applied to the image region of an object inside the depth of field. Hence, the observer who watches the display unit 305 can easily and quickly check the object inside the depth of field. Hence, even when the display unit 305 is a viewfinder whose size of the display plane is small, the observer can easily and quickly determine whether or not an object in the 3D image is included in the depth of field.

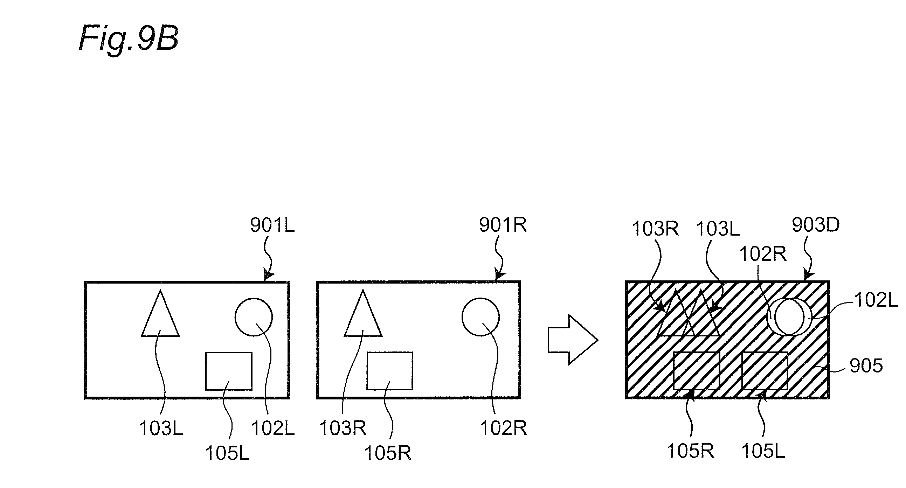

It is to be noted that, an overlaid image 903D shown in Fig. 9B is an example of an image in which a marker is applied to the image region of an object outside the depth of field. In this manner, the marker may be applied to the image region of an object outside the depth of field.

It is to be noted that, in the second embodiment, similarly to the first embodiment, the marker is not limited to a flashing zebra (hatched) pattern.

With the 3D image processing device according to the second embodiment, whether or not an object is included in a depth of field can easily be determined.

Thus, efficient creation of a 3D image can be achieved.

It is to be noted that, the 3D image processing device 710 according to the second embodiment shows the exemplary structure being integrated with the 3D image imaging device. However, the 3D image processing device 710 may be structured as being separated by the imaging device. In this case, the first imaging unit information signal, the second imaging unit information signal and the like may be included as metadata in the first image signal, the second image signal and the like. The metadata may include the setting information of the cameras. In this case, the 3D image processing device 710 may derive the depth of field based on the setting information. Alternatively, the metadata may include the information of the depth of field.

### 3. Third Embodiment

#### 3-1. Overview

A 3D image processing device according to the present embodiment is a 3D image processing device that processes a 3D image, to thereby perform a predetermined process to an object outside 3D safe, such that the 3D image can be turned into a 3D image that is natural and brings no discomfort. More specifically, the 3D image processing device performs a defocus processing to an object outside 3D safe in a 3D image and outputs the result.

Thus, in the 3D image having undergone the defocus process, an object outside 3D safe has its contour or the content detail defocused. Thus, it is less prone to discomfort the observer.

The 3D image processing device according to the present embodiment may have a similar configuration as the 3D image processing devices 310 and 710 according to the first and second embodiments, respectively. In the following description, reference and description as to the marker generating unit 303, the overlay unit 304, the depth of field detecting unit 702, the distance detecting unit 703, the marker generating unit 704 and the like will not be repeated.

#### 3-2. Structure

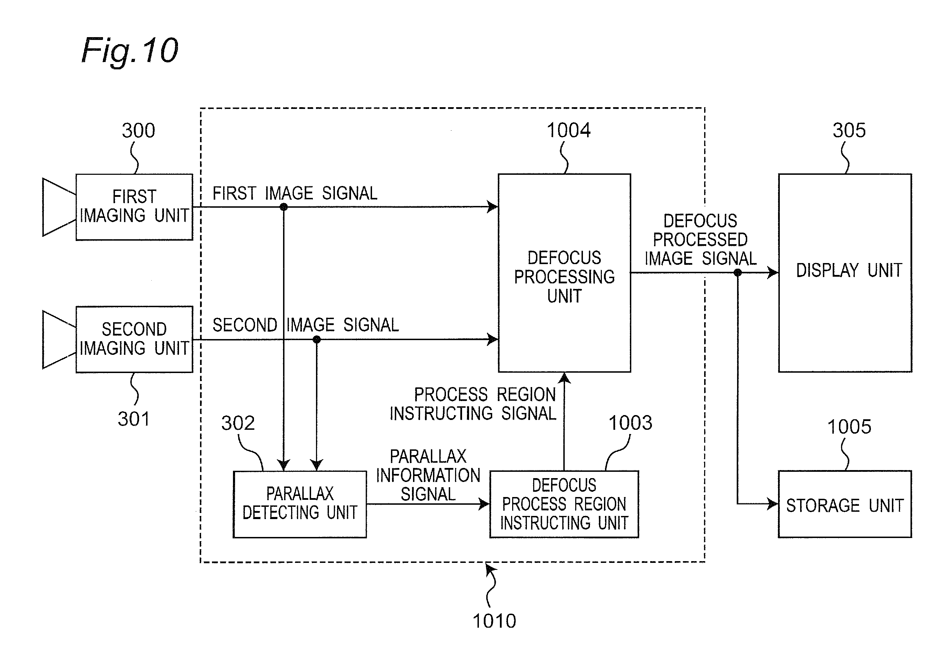

With reference to Fig. 10, a description will be given of the structure of a 3D image processing device of the present embodiment. Fig. 10 is a block diagram showing the structure of a 3D image imaging device including the 3D image processing device 1010 according to the present embodiment.

The 3D image processing device 1010 includes a defocus process region instructing unit 1003 that detects, based on a parallax information signal, an image region that represents an object outside 3D safe, and outputs a process region instructing signal instructing a process (defocus processing) with the image region, and a defocus processing unit 1004 that executes an image process (defocus processing) to the image region of each of the first image signal and the second image signal instructed by the process region instructing signal, and that outputs a defocus processed image signal.

It is to be noted that, the 3D image processing device 1010 may further include, in addition to the display unit 305 that displays an image based on the defocus processed image signal, a storage unit 1005 that stores the defocus processed image signal.

In the present embodiment, the defocus process region instructing unit 1003 and the defocus processing unit 1004 structure an image processing unit that performs a predetermined image processing to at least one of the first image signal (left eye image signal) and the second image signal (right eye image signal) based on the comparison between the magnitude of parallax of an object and a predetermined value.

3-3. Operation

Now, a description will be given of an operation of the 3D image processing device 1010. In the following, a description of the operation will be given taking up an example of imaging the objects 102, 103, and 105 shown in Fig. 1.

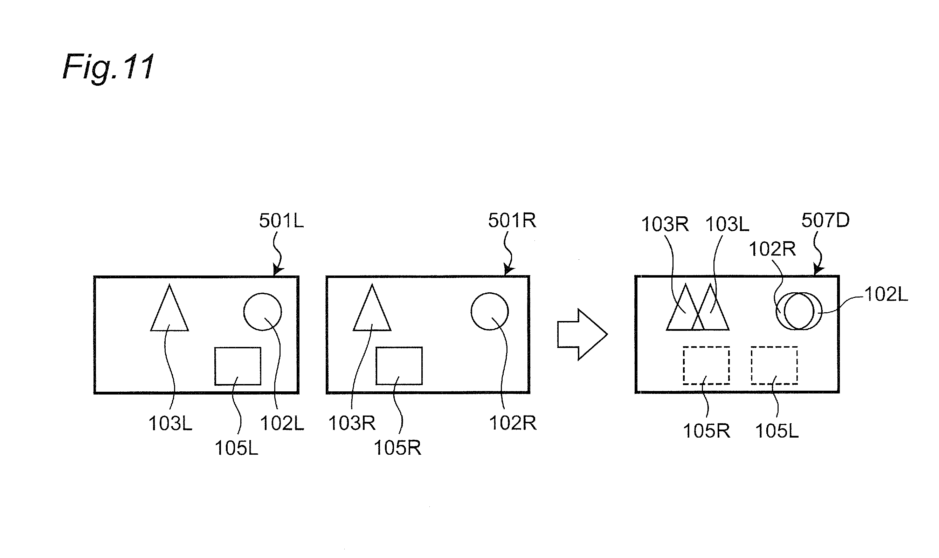

Fig. 11 illustrates a left eye image 501 L imaged by the first imaging unit 300, a right eye image 501 R imaged by the second imaging unit 301, and a defocus process image 507D in which a defocus processing is performed to a combined image of the left eye image and the right eye image.

The parallax detecting unit 302 receives the left eye image 501 L and the right eye image 501 R, to obtain the parallax of an arbitrary pixel of each of the images, and outputs the obtained parallax as a parallax information signal to the defocus process region instructing unit 1003.

The defocus process region instructing unit 1003 detects the pixel having the parallax outside 3D safe based on the parallax information signal. The defocus process region instructing unit 1003 determines a defocus process region, in which the pixel is included, and outputs the determined region as a process region instructing signal to the defocus processing unit 1004.

The defocus processing unit 1004 performs a defocus processing based on the process region instructing signal to at least one of the first image signal and the second image signal or the combined image of the first image and the second image, to output the result as a defocus processed image signal.

The defocus process image 507D shown in Fig. 11 is an example of an image in which the defocus processing is performed to a signal of the combined image of the first image and the second image. Here, the image regions 105R and 105L as to the object 105 are subjected to the defocus process, whereby the contour or the content detail is not easily recognizable.

Thus, the 3D image processing device 1010 can output a 3D image in which the defocus processing is performed to the image region of an object outside 3D safe. Therefore, the 3D image having undergone the defocus processing is less likely to discomfort the observer, at least to some degree. Accordingly, even in the case where an object outside 3D safe is inevitably included in the 3D image, the 3D image can be turned into an image that is natural and causes no discomfort.

It is to be noted that, the image processing performed by the defocus processing unit 1004 is not limited to the defocus processing, and the process may be any image processing that makes an observer difficult to recognize a predetermined image region.

4. Conclusion

The 3D image processing devices according to the present embodiments detect the parallax of an arbitrary pixel based on the left eye image and the right eye image, to thereby detect the parallax of the object. The 3D image processing devices further determine whether or not the magnitude of the parallax of the object exceeds the predetermined value, and perform a predetermined image processing in accordance with the determination. Thus, the 3D image processing devices help a user to create a 3D image that is natural and brings no discomfort.

It is to be noted that the 3D image processing devices according to the present embodiments may integrally be structured with an imaging device, to structure 3D image imaging devices. Further, the 3D image processing devices of the present embodiments may integrally be structured with editing devices, to structure 3D image editing devices.

It is to be noted that the 3D image processing device may be implemented by an information processing device such as a computer, and a program that can be executed by the information processing device. Further, the program may previously be installed in the information processing device. Further, the program may be distributed as being recorded on a recording medium. Still further, the program may be distributed via the Internet or the like.

Industrial Applicability

The 3D image processing device according to the embodiments can help a user to create a 3D image and is useful therefor.

Reference Signs List

102 ... OBJECT

103 ... OBJECT

| | |
|---|---|
| 104 ... | OBJECT |
| 105 ... | OBJECT |
| 106 ... | OBJECT |
| 300 ... | FIRST IMAGING UNIT |
| 301 ... | SECOND IMAGING UNIT |
| 302 ... | PARALLAX DETECTING UNIT |
| 303 ... | MARKER GENERATING UNIT |
| 304 ... | OVERLAY UNIT |
| 305 ... | DISPLAY UNIT |
| 310 ... | 3D IMAGE PROCESSING DEVICE |
| 401L ... | FIRST PIXEL INTERPOLATION UNIT |
| 401R ... | SECOND PIXEL INTERPOLATION UNIT |
| 402L ... | FIRST IMAGE SHIFT UNIT |
| 402R ... | SECOND IMAGE SHIFT UNIT |
| 403 ... | DIFFERENCE COMPARISON UNIT |
| 700 ... | FIRST IMAGING UNIT |
| 701 ... | SECOND IMAGING UNIT |
| 702 ... | DEPTH OF FIELD DETECTING UNIT |
| 703 ... | DISTANCE DETECTING UNIT |
| 704 ... | MARKER GENERATING UNIT |
| 710 ... | 3D IMAGE PROCESSING DEVICE |
| 805L ... | IMAGE PICKUP ELEMENT OF FIRST IMAGING UNIT |
| 805R ... | IMAGE PICKUP ELEMENT OF SECOND IMAGING UNIT |
| 1003 ... | DEFOCUS PROCESS REGION INSTRUCTING UNIT |
| 1004 ... | DEFOCUS PROCESSING UNIT |
| 1005 ... | STORAGE UNIT |
| 1010 ... | 3D IMAGE PROCESSING DEVICE |

**Claims**

1. A 3D image processing device capable of processing a 3D image signal, the 3D image signal including a left eye image signal and a right eye image signal and realizing a 3D image, comprising:

a parallax detecting unit operable to receive the left eye image signal and the right eye image signal, detect a parallax of an object within the 3D image, and output the detected parallax as parallax information; and
an image processing unit operable to perform, based on the parallax information, a predetermined image processing to an image region of an object of at least one of the left eye image signal and the right eye image signal, the object having a parallax within a predetermined range.

2. The 3D image processing device according to claim 1,
wherein the parallax detecting unit includes:

a pixel interpolation unit operable to perform a pixel interpolation to the left eye image signal and to the right eye image signal; and
a difference comparison unit operable to perform a difference comparison based on the left eye image signal that has undergone the pixel interpolation and is output from the pixel interpolation unit and the right eye image signal that has undergone the pixel interpolation and is output from the pixel interpolation unit, the difference comparison unit detecting the parallax of the object at a precision higher than 1 pixel precision, to output the parallax information.

3. The 3D image processing device according to claim 1, wherein the image processing unit performs a process of applying a marker to the image region of the object having a parallax whose magnitude is greater than a predetermined value.

4. The 3D image processing device according to claim 1, wherein the image processing unit performs a process of applying a marker to the image region of the object having a parallax whose magnitude is equal to or smaller than a predetermined value.

5. The 3D image processing device according to claim 1, wherein the image processing unit performs a defocus processing to the image region of the object having a parallax whose magnitude is greater than a predetermined value.

6. The 3D image processing device according to claim 1, wherein the image processing unit performs a defocus processing to the image region of the object having a parallax whose magnitude is equal to or smaller than a predetermined value.

7. The 3D image processing device according to claim 1, further comprising:

a depth of field detecting unit operable to receive at least one of first setting information of a camera of a first imaging device that outputs the left eye image signal and second setting information of a camera of a second imaging device that outputs the right eye image signal to detect a depth of field of at least one of the camera of the first imaging device and the camera of the second imaging device, and output the detected depth of field as depth of field information; and a distance detecting unit operable to detect a distance from the first imaging device and the second imaging device to the object based on the parallax information and the depth of field information, and
wherein the image processing unit determines, based on the detected distance and the depth of field, the image region to which the predetermined image process is to be performed in at least one of the left eye image signal and the right eye image signal.

8. The 3D image processing device according to claim 7, wherein the image processing unit performs a process of applying a marker to the image region of the object within the depth of field.

9. The 3D image processing device according to claim 7, wherein the image processing unit performs a process of applying a marker to the image region of the object outside the depth of field.

10. The 3D image processing device according to claim 1, further comprising an input unit operable to receive a size of a display screen of a display device that performs a 3D image display based on the 3D image signal and
wherein, based on the size of the display screen received from the input unit, the image region to which the predetermined image process is to be performed is determined.

11. A 3D image processing method for processing a 3D image signal, the 3D image signal including a left eye image signal and a right eye image signal and realizing a 3D image, comprising:

receiving the left eye image signal and the right eye image signal, detecting a parallax of an object within the 3D image, and outputting the detected parallax as parallax information; and performing, based on the parallax information, a predetermined image processing to an image region of an object of at least one of the left eye image signal and the right eye image signal, the object having a parallax within a predetermined range.

## Amended claims under Art. 19.1 PCT

**1. Amended**) (limitations of original Claim 2 are added)
A 3D image processing device capable of processing a 3D image signal, the 3D image signal including a left eye image signal and a right eye image signal and realizing a 3D image, comprising:

a pixel interpolation unit operable to perform a pixel interpolation to the left eye image signal and to the right eye image signal;
a difference comparison unit operable to perform a difference comparison based on the left eye image signal that has undergone the pixel interpolation and is output from the pixel interpolation unit and the right eye image signal that has undergone the pixel interpolation and is output from the pixel interpolation unit, the difference comparison unit detecting a parallax of an object at a precision higher than 1 pixel precision, to output the detected parallax as parallax information; and
an image processing unit operable to perform, based on the parallax information, a predetermined image processing to an image region of an object of at least one of the left eye image signal and the right eye image signal, the object having a parallax within a predetermined range.

**2. Amended**) (only renumbered from original Claim 3)
The 3D image processing device according to claim 1, wherein the image processing unit performs a process of applying a marker to the image region of the object having a parallax whose magnitude is greater than a predetermined value.

**3. Amended**) (only renumbered from original Claim 4)
The 3D image processing device according to claim 1, wherein the image processing unit performs a process of applying a marker to the image region of the object having a parallax whose magnitude is equal to or smaller than a predetermined value.

**4. Amended**) (only renumbered from original Claim 5)
The 3D image processing device according to claim 1, wherein the image processing unit performs a defocus processing to the image region of the object having a parallax whose magnitude is greater than a predetermined value.

**5. Amended**) (only renumbered from original Claim 6)
The 3D image processing device according to claim 1, wherein the image processing unit performs a defocus processing to the image region of the object having a parallax whose magnitude is equal to or smaller than a predetermined value.

**6. Amended**) (only renumbered from original Claim 7)
The 3D image processing device according to claim 1, further comprising:

a depth of field detecting unit operable to receive at least one of first setting information of a camera of a first imaging device that outputs the left eye image signal and second setting information of a camera of a second imaging device that outputs the right eye image signal to detect a depth of field of at least one of the camera of the first imaging device and the camera of the second imaging device, and output the detected depth of field as depth of field information; and a distance detecting unit operable to detect a distance from the first imaging device and the second imaging device to the object based on the parallax information and the depth of field information, and wherein the image processing unit determines, based on the detected distance and the depth of field, the image region to which the predetermined image process is to be performed in at least one of the left eye image signal and the right eye image signal.

**7. Amended**) (corresponding to original Claim 8)
The 3D image processing device according to claim 6, wherein the image processing unit performs a process of applying a marker to the image region of the object within the depth of field.

**8. Amended**) (corresponding to original Claim 9)
The 3D image processing device according to claim 6, wherein the image processing unit performs a process of applying a marker to the image region of the object outside the depth of field.

**9. Amended**) (only renumbered from original Claim 10)
The 3D image processing device according to claim 1, further comprising an input unit operable to receive a size of a display screen of a display device that performs a 3D image display based on the 3D image signal and wherein, based on the size of the display screen received from the input unit, the image region to which the predetermined image process is to be performed is determined.

**10. Amended**) (original Claim 11 plus features which corresponds to the limitations recited on original Claim 2)
A 3D image processing method for processing a 3D image signal, the 3D image signal including a left eye image signal and a right eye image signal and realizing a 3D image, comprising:

performing a pixel interpolation to the left eye image signal and to the right eye image signal; performing a difference comparison based on the left eye image signal that has been output in the performing the pixel interpolation and the right eye image signal that has been output in the performing the pixel interpolation, to detect a parallax of an object at a precision higher than 1 pixel precision and output the detected parallax as parallax information; and performing, based on the parallax information, a predetermined image processing to an image region of an object of at least one of the left eye image signal and the right eye image signal, the object having a parallax within a predetermined range.

**11. Cancelled**)

Fig.1

EP 2 512 146 A1

*Fig.2A*

EP 2 512 146 A1

## Fig.2B

*Fig.3*

EP 2 512 146 A1

## Fig.4

302

PARALLAX DETECTING UNIT

FIRST IMAGE SIGNAL
(LEFT EYE IMAGE) →

401L
FIRST PIXEL
INTERPOLATION
UNIT

402L
FIRST IMAGE
SHIFT UNIT

403
DIFFERENCE
COMPARISON UNIT

→ PARALLAX
INFORMATION
SIGNAL

SECOND IMAGE SIGNAL
(RIGHT EYE IMAGE) →

401R
SECOND PIXEL
INTERPOLATION
UNIT

402R
SECOND IMAGE
SHIFT UNIT

Fig.5A

*Fig.5B*

EP 2 512 146 A1

Fig.6

EP 2 512 146 A1

Fig.7

EP 2 512 146 A1

*Fig.8*

## Fig.9A

Fig.9B

EP 2 512 146 A1

*Fig.10*

EP 2 512 146 A1

Fig.11

<div style="text-align:center">**INTERNATIONAL SEARCH REPORT**</div>

| | International application No. |
|---|---|
| | PCT/JP2010/007138 |

**A. CLASSIFICATION OF SUBJECT MATTER**
*H04N13/02*(2006.01)i, *G03B17/18*(2006.01)i, *G03B35/08*(2006.01)i, *H04N5/225*
(2006.01)i

According to International Patent Classification (IPC) or to both national classification and IPC

**B. FIELDS SEARCHED**

Minimum documentation searched (classification system followed by classification symbols)
H04N13/02, G03B17/18, G03B35/08, H04N5/225

Documentation searched other than minimum documentation to the extent that such documents are included in the fields searched
Jitsuyo Shinan Koho          1922-1996     Jitsuyo Shinan Toroku Koho     1996-2011
Kokai Jitsuyo Shinan Koho    1971-2011     Toroku Jitsuyo Shinan Koho     1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2008-205758 A (Fujifilm Corp.),<br>04 September 2008 (04.09.2008),<br>paragraphs [0019] to [0052]; fig. 1 to 11<br>& US 2008/0199046 A1 | 1,3,4,11<br>2,5-10 |
| Y | JP 2003-150939 A (Fuji Heavy Industries Ltd.),<br>23 May 2003 (23.05.2003),<br>paragraphs [0008] to [0038]; fig. 1 to 7<br>(Family: none) | 2 |
| Y | JP 9-74573 A (Matsushita Electric Industrial<br>Co., Ltd.),<br>18 March 1997 (18.03.1997),<br>paragraphs [0014], [0058] to [0059]<br>& EP 751689 A2          & US 6005607 A | 5,6,10 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 March, 2011 (01.03.11) | 15 March, 2011 (15.03.11) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2010/007138 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-311962 A (Nikon Corp.),<br>29 November 2007 (29.11.2007),<br>paragraphs [0007] to [0037]; fig. 1 to 3<br>(Family: none) | 7-9 |
| Y | JP 2008-141666 A (Fujifilm Corp.),<br>19 June 2008 (19.06.2008),<br>paragraphs [0079] to [0088]; fig. 13, 14<br>(Family: none) | 7-9 |

Form PCT/ISA/210 (continuation of second sheet) (July 2009)

**EP 2 512 146 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001142166 A